# EUROPÄISCHE PATENTANMELDUNG

(11) **EP 1 990 192 A2**
(43) Veröffentlichungstag der Anmeldung: **12.11.2008**
(21) Anmeldenummer: 08154589.9
(22) Anmeldetag: 16.04.2008
(51) Int. Cl.: B41F 13/28

(54) **Lagerungen eines Zylinders einer Rotationsdruckmaschine**

(30) Priorität: 28.04.2007 DE 102007020217; 31.01.2008 DE 102008000204
(71) Anmelder: Koenig & Bauer Aktiengesellschaft, 97080 Würzburg (DE)
(72) Erfinder: Liebler, Manfred, 97837, Erlenbach (DE)

(57) **Zusammenfassung**

Die Erfindung betrifft eine Lagerung (01) eines Zylinders (02) einer Rotationsdruckmaschine, mit mindestens einem ersten in einer Bohrung (03) eines Seitengestells (04) angeordneten Lagerring (05), sowie mindestens einem gegenüber dem ersten Lagerring (05) drehbar gelagerten zweiten Lagerring (07), wobei zwischen dem ersten Lagerring (05) und dem zweiten Lagerring (07) mindestens ein dritter Lagerring (08) gegenüber dem ersten Lagerring (05) und dem zweiten Lagerring (07) drehbar angeordnet ist, wobei der dritte Lagerring (08) zur Ermöglichung einer Druck-An-/Ab-Stellung an einen benachbarten Zylinder exzenterförmig ausgebildet ist, und wobei zwischen dem zweiten Lagerring (07) und dem dritten Lagerring (08) innerhalb mindestens eines sich in axialer Richtung erstreckenden Abwälzbereichs (A) erste Wälzkörper (09) und zwischen dem ersten Lagerring (05) und dem dritten Lagerring (08) innerhalb mindestens eines sich in axialer Richtung erstreckenden Abstützbereichs (B) zweite Wälzkörper (10) oder Gleitflächen angeordnet sind, wobei zwischen dem ersten Lagerring (05) und der Bohrung (03) ein sich in axialer Richtung über mindestens den zwischen zweitem und dritten Lagerring angeordneten Abwälzbereich (A) erstreckender Spalt (11) vorgesehen ist, welcher ein elastisches Aufweiten des ersten Lagerrings (05) radial von innen nach außen erlaubt, um im Abwälzbereich (A) eine Ausdehnung der Lagerringe (05; 07) in radialer Richtung frei vor Überschreitung einer maximal zulässigen Vorspannung zu ermöglichen.

## Beschreibung

Die Erfindung betrifft Lagerungen eines Zylinders einer Rotationsdruckmaschine gemäß dem Oberbegriff des Anspruchs 1 oder 2.

Durch die EP 0 614 759 A1 sind ein Verfahren und eine Vorrichtung zur Einstellung eines Achsabstandes eines Zylinders zu einem benachbarten Zylinder in einer Rotationsdruckmaschine bekannt. Ein Lager ist dabei in einer Exzenterbuchse angeordnet. Die Exzenterbuchse ist in eine Bohrung eines Seitengestells ohne Spiel eingepresst. Um mit einfachen technischen Mitteln eine Einstellung des Achsabstandes der Zylinder, als auch deren spielfreien Druckbetrieb zu ermöglichen ist vorgesehen, eine Trennfuge zwischen Bohrung und Exzenterbuchse hydraulisch zu beaufschlagen, wodurch der Durchmesser der Exzenterbuchse verkleinert wird und die Exzenterbuchse positionsgerecht verdreht werden kann. Nach Einstellen des Achsabstandes durch Verdrehen der Exzenterbuchse wird die Trennfuge wieder druckentlastet. Im Bereich der Trennfuge ist hierbei eine ringförmige, hydraulisch beaufschlagbare Aussparung angeordnet. In anderer Ausführung ist anstelle der beaufschlagbaren Aussparung ein dritter Lagerring und zwischen diesem und dem Exzenterring angeordnete Wälzelemente vorgesehen.

Durch die WO 01/38093 A1 ist eine Lagerung eines Zylinders einer Rotationsdruckmaschine bekannt, bei der ein die Rotation des Zylinders ermöglichendes Radiallager in einer Buchse und diese Buchse in einer Bohrung eines Seitengestells angeordnet ist. Die Buchse weist einen Kragen auf und ist mittels Schrauben gegen Verschieben in axialer Richtung gesichert. Die Buchse kann zur Einstellung eines Achsabstandes zu einem benachbarten Zylinder als Exzenterbuchse ausgeführt sein. Die Buchse weist einen größeren Außendurchmesser auf, als ein Ballen des Zylinders, zur Erleichterung einer Demontage des Zylinders und zur Vereinfachung einer Einstellung des Lagerspiels. Das Radiallager ist vollständig außerhalb des Seitengestells angeordnet.

Durch die EP 0 706 880 A2 ist eine Lagerung eines Zylinders einer Rotationsdruckmaschine bekannt, bei der ein Lager in einer Exzenterbuchse und diese Exzenterbuchse in einer Bohrung eines Seitengestells spielfrei festspannbar angeordnet ist. Um beim spielfreien Festspannen die Flächenpressung zwischen der Exzenterbuchse und der Bohrung im Seitengestell, sowie einen zum Erreichen einer erforderlichen Anpresskraft benötigten Druck zu minimieren, ist eine einzige, sich über einen Segmentwinkel von 60° bis 120° in Umfangsrichtung erstreckende Dackkammer vorgesehen. Die Druckkammer ist hierbei zwischen einem inneren und einem äußeren, auf dem inneren Ring mit Presssitz aufgebrachten Ring der Exzenterbuchse angeordnet. Die Exzenterbuchse kann dabei als ein Wälzflächen für Wälzkörper aufweisender Lagerring des eine Rotation des Zylinders ermöglichenden Radiallagers ausgebildet sein.

Durch die DE 100 14 040 A1 ist bekannt, zum Synchronisieren einer Stellbewegung einer Rotationsdruckmaschine einen mittels Pneumatikzylinder betätigbaren Kniehebelmechanismus zu verwenden, um beidseits eines Zylinders angeordnete Exzenterbuchsen einer Lagerung des Zylinders, bei der jeweils ein an einer Seite des Zylinders angeordnetes Lager in einer Exzenterbuchse und diese Exzenterbuchse in einer Bohrung eines Seitengestells angeordnet ist, jeweils um den gleichen Winkelbetrag zu verschwenken. Die Exzenterbuchse kann dabei als ein Lagerring eines Drei- oder Vierringlagers ausgebildet sein.

Die DE 100 21 233 A1 offenbart ein Dreiringlager für einen Zylinder einer Druckmaschine, wobei ein exzentrischer Zwischenring zwischen einem äußeren und einem inneren Lagerring in einer Bohrung eines Seitengestells gelagert sind.

Die DE 10 2004 035 387 B4 betrifft ein Zylinderrollenlager für den Hochdrehzahlbereich, beispielsweise im Werkzeugmaschinenbau, wobei ein Lager mit einem Innenring, einem Außenring und dazwischen angeordneten Wälzkörpern in einem Lagergehäuse angeordnet ist. Am Umfang des Außenringes ist eine wannenartige Vertiefung derart ausgebildet, dass zwischen Außenring und Lagergehäuse ein Spalt zur Ausdehnung bei fliehkraftbedingter Ausdehnung oder Wärmeausdehnung vorliegt.

Der Erfindung liegt die Aufgabe zugrunde, Lagerungen eines Zylinders einer Rotationsdruckmaschine zu schaffen.

Die Aufgabe wird erfindungsgemäß durch die Merkmale des Anspruchs 1 oder 2 gelöst.

Eine Lagerung für einen Zylinder einer Rotationsdruckmaschine umfasst demnach mindestens einen ersten in einer Bohrung eines Seitengestells vorzugsweise spielfrei, z. B. eingepresst, angeordneten Lagerring, sowie mindestens einen gegenüber dem ersten Lagerring drehbar gelagerten, einen Zapfen des Zylinders aufnehmenden zweiten Lagerring, wobei zwischen den Lagerringen innerhalb mindestens eines sich in axialer Richtung erstreckenden Abwälzbereichs Wälzkörper vorzugsweise derart angeordnet sind, dass die Lagerung spielfrei ist. Zumindest auf einer Länge, welche in Axialrichtung betrachtet wenigstens einem Abwälzbereich des Radiallagers entspricht, weist das Lager einen Freiheitsgrad in radialer Richtung nach außen auf, d.h. ist zumindest in diesem Bereich in radialer Richtung nicht durchgängig und spielfrei gegen das Seitengestell abgestützt.

Dabei ist in einer ersten Ausführung zwischen dem ersten Lagerring und der im Seitengestell angeordneten Bohrung ein sich in axialer Richtung entlang des Abwälzbereichs erstreckender Spalt vorgesehen, welcher ein elastisches Aufweiten des ersten Lagerrings radial von innen nach außen im Abwälzbereich erlaubt, um eine Ausdehnung der Lagerringe in radialer Richtung frei vor Überschreitung einer maximal zulässigen Vorspannung der Lagerringe und der Wälzkörper untereinander zu ermöglichen. Der Spalt erstreckt sich vorzugsweise zumindest auf der gesamten Länge des Abwälzbereichs und in einer vorteilhaften Ausführung vollumfänglich.

In einer anderen Ausführung sind Wirkflächen (Abrollflächen von Wälzkörpern eines Wälzlagers und/oder Gleitflächen eines Gleitlagers) eines die Rotation des Zylinders ermöglichenden Radiallagers und eines die An-/Abstellbewegung ermöglichenden Radiallagers der selben Lagerung in axialer Richtung betrachtet zueinander versetzt angeordnet und/oder ein äußerer Ring des die Rotation des Zylinders ermöglichenden Radiallagers ist mit einer in Umfangsrichtung im wesentlichen konstanten Wandstärke ausgebildet.

Die mit der Erfindung erzielbaren Vorteile bestehen insbesondere darin, dass durch den sich in axialer Richtung über den Abwälzbereich erstreckenden Freiheitsgrad (Spalt oder freier Raum) äußere und innere Lasten sowie Wärmeausdehnungen der Lagerung kompensiert werden, ohne dass die Lagerung zu irgendeinem Zeitpunkt Spiel aufweist und ohne dass eine maximal zulässige Vorspannung der Lagerringe untereinander zu irgendeinem Zeitpunkt überschritten wird.

In der ersten Ausführung wird die im Wesentlichen dadurch verwirklicht, dass mindestens ein Lagerring einer Lagerung eines Zylinders einer Rotationsdruckmaschine in einem Abwälzbereich von zwischen einem ersten Lagerring und einem gegenüber dem ersten Lagerring drehbar gelagerten Zapfen angeordneten Wälzkörpern, oder von zwischen einem ersten Lagerring und einem gegenüber einem den Zapfen aufnehmenden zweiten Lagerring angeordneten Wälzkörpern gegenüber dem Zapfen oder gegenüber dem Seitengestell einen Spalt aufweist, welcher ohne dass die Lagerung ihre Spielfreiheit verliert eine Ausdehnung der Lagerringe in radialer Richtung frei von einer Überschreitung einer maximal zulässigen Vorspannung der Lagerringe untereinander erlaubt. In der zweiten Ausführung dadurch, dass Abroll- bzw. Abstützbereich des Radiallagers und der Abstützbereich des Lagers zur An-/Abstellung bezüglich keiner auf der Rotationsachse senkrecht stehenden Ebene überschneiden.

Eine vorteilhafte Ausgestaltung der Lagerung sieht vor, dass zwischen dem ersten und dem zweiten Lagerring mindestens ein dritter Lagerring gegenüber dem ersten und dem zweiten Lagerring drehbar angeordnet ist, wobei sich der Spalt zwischen dem ersten Lagerring und der im Seitengestell angeordneten Bohrung in axialer Richtung über den Abwälzbereich der Wälzkörper zwischen zweitem und drittem Lagerring erstreckt, welcher eine Ausdehnung der Lagerringe frei von einer Überschreitung einer maximal zulässigen Vorspannung der Lagerringe in radialer Richtung untereinander erlaubt. Durch den sich in axialer Richtung über den Abwälzbereich der Wälzkörper zwischen zweitem und dritten Lagerring erstreckenden Spalt können äußere und innere Lasten sowie Wärmeausdehnungen der Lagerung kompensiert werden, ohne dass die Lagerung zu irgendeinem Zeitpunkt Spiel aufweist. Grundsätzlich kann dabei der zweite Lagerring gegenüber dem dritten Lagerring mit Vorspannung oder mit Spiel eingestellt sein. In ersterem Fall gleicht der Spalt innere und äußere Lasten sowie Wärmeausdehnungen zwischen erstem und drittem sowie drittem und zweitem Lagerring, in letzterem Fall zwischen erstem und drittem Lagerring (es könnten auch vier Lagerringe sein) aus.

Der dritte Lagerring kann dabei zur Ermöglichung einer An-/Abstellbewegung zu bzw. von einem benachbarten Zylinder exzenterförmig ausgebildet sein. Hierdurch kann auf besonders einfache Weise durch Verdrehen des dritten Lagerrings eine betriebsmäßige radiale Druck-An-/Ab-Stellung erfolgen. Im Gegensatz zu reinen Montagehilfen zur Abstandseinstellung ist das die drei Lagerringe - und insbesondere zwischen je zwei Ringen Wälzkörper - aufweisende Lager zum betriebsmäßigen Verschwenken ohne nennenswerten Verschleiß ausgelegt. Der exzentrische Lagerring der mindestens drei Ringe steht hierbei mechanisch mit einer fernbetätigbaren Verdreheinrichtung in Wirkverbindung.

Vorzugsweise ist der erste Lagerring zumindest einseitig, vorteilhaft in Bezug auf die Steifigkeit jedoch beidseits des sich in axialer Richtung entlang des Abwälzbereichs der Wälzkörper erstreckenden Spalts beispielsweise durch Einpressen vorzugsweise spielfrei gegenüber der Bohrung abgestützt.

Eine andere vorteilhafte Ausgestaltung der Lagerung sieht vor, dass eine radiale Abmessung des ersten Lagerrings im Bereich des sich über den Abwälzbereich erstreckenden Spalts derart gewählt ist, dass eine vorgegebene Steifigkeit der Lagerung erreicht wird. Die radiale Abmessung des ersten Lagerrings im Bereich des sich über den Abwälzbereich erstreckenden Spalts beträgt vorzugsweise 5 mm bis 10 mm.

Der Spalt weist vorzugsweise in radialer Richtung eine Weite von 0,1 mm bis 1 mm auf.

Zwischen den Lagerringen können die Abwälzbereiche frei von Verschmutzungen haltende Dichtringe angeordnet sein. Alternativ oder zusätzlich hierzu können zwischen den Lagerringen die Abwälzbereiche frei von Verschmutzungen haltende Fetträume angeordnet sein.

Eine besonders vorteilhafte, die Montage und Wartung vereinfachende Lagerung sieht vor, dass der erste Lagerring außerhalb des Abwälzbereichs einen Zentrierbund aufweist, zur positionsrichtigen Anordnung des ersten Lagerrings in der Bohrung. Der Zentrierbund kann mit Spiel oder als Pressung ausgeführt sein.

Vorzugsweise weist der erste Lagerring zur axialen Abbindung einen Kragen auf und ist mittels Schrauben oder Klemmung (z. B. Pratzen) zur Sicherung gegenüber einer axialen Verschiebung am Seitengestell angeordnet.

Zur Erleichterung einer Demontage des Zylinders und/oder zur Vereinfachung einer Einstellung des Lagerspiels kann der erste Lagerring und damit die in dem Seitengestell angeordnete Bohrung der Lagerung z. B. einen größeren Außendurchmesser aufweisen, als ein Ballen des Zylinders.

Ausführungsbeispiele der Erfindung sind in den Zeichnungen dargestellt und werden im Folgenden näher beschrieben.

Es zeigen:
- Fig. 1: eine schematische Darstellung eines Längsschnitts durch eine erste Ausführung einer Lagerung für einen Zylinder einer Rotationsdruckmaschine;
- Fig. 2: eine schematische Darstellung eines Längsschnitts durch eine zweite Ausführung einer Lagerung für einen Zylinder einer Rotationsdruckmaschine;
- Fig. 3: eine schematische Darstellung eines Längsschnitts durch eine dritte Ausführung einer Lagerung für einen Zylinder einer Rotationsdruckmaschine;
- Fig. 4: eine schematische Darstellung eines Längsschnitts durch eine vierte Ausführung einer Lagerung für einen Zylinder einer Rotationsdruckmaschine;
- Fig. 5: eine schematische Darstellung eines Längsschnitts durch eine fünfte Ausführung einer Lagerung für einen Zylinder einer Rotationsdruckmaschine;
- Fig. 6: eine schematische Darstellung eines Längsschnitts durch eine sechste Ausführung einer Lagerung für einen Zylinder einer Rotationsdruckmaschine;
- Fig. 7: eine schematische Darstellung eines Längsschnitts durch eine siebte Ausführung einer Lagerung für einen Zylinder einer Rotationsdruckmaschine;
- Fig. 8: eine schematische Darstellung eines Längsschnitts durch eine achte Ausführung einer Lagerung für einen Zylinder einer Rotationsdruckmaschine.

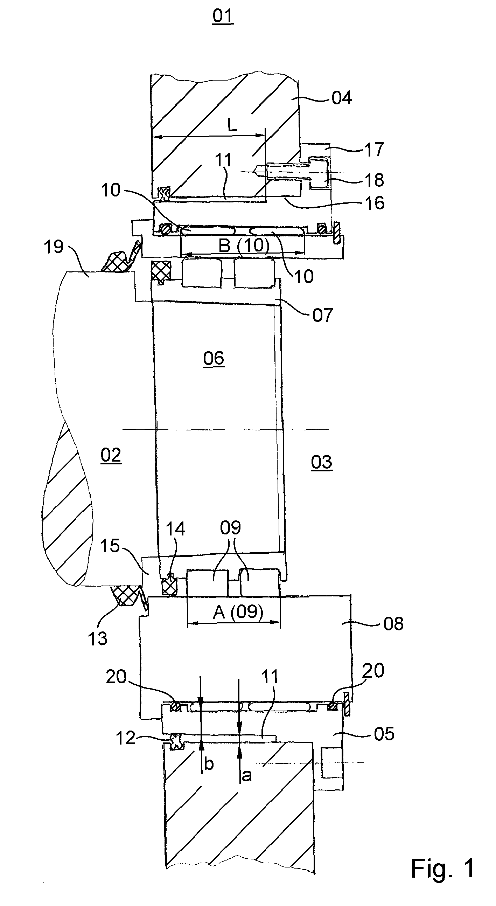

Fig. 1 bis 8 zeigen schematische Darstellungen eines Längsschnitts durch eine Lagerung 01 für einen Zylinder 02 bzw. eines Zylinders 02, z. B. Formzylinder 02 oder Übertragungszylinder eines Offsetdruckwerks, einer Rotationsdruckmaschine in verschiedenen Ausführungsbeispielen. Die Lagerung 01 für den Zylinder 02 umfasst einen ersten, z. B. äußersten, in einer Bohrung 03 eines Seitengestells 04 spielfrei, z. B. eingepresst, angeordneten Lagerring 05, einem gegenüber dem ersten Lagerring 05 drehbar gelagerten, einen Zapfen 06 des Zylinders 02 aufnehmenden und mit diesem drehsteif verbundenen zweiten, z. B. innersten, Lagerring 07. Wie im Beispiel ist vorzugsweise - z. B. in der Ausführung als Drei- oder gar Vierringlager - zwischen erstem Lagerring 05 und zweitem Lagerring 07 gegenüber dem ersten Lagerring 05 und dem zweiten Lagerring 07 drehbar ein exzenterförmiger dritter, z. B. mittlerer, Lagerring 08 vorgesehen. Der dritte Lagerring 08 ist dann z. B. zur Bewerkstelligung einer (betriebsmäßigen) Druck-An-/Ab-Bewegung relativ zu einem benachbarten Zylinder exzenterförmig ausgebildet. Durch Verdrehen des dritten (mittleren) Lagerrings 08 kann eine radiale Veränderung der Achslage bzgl. einer radialen Richtung erfolgen (Fig. 1 bis 8).

Zwischen den Lagerringen 05; 07; 08 innerhalb eines sich in axialer Richtung erstreckenden Abstützbereichs A; B, z.B. Abwälzbereich A; B, sind Wälzkörper 09; 10 derart angeordnet, dass die Lagerung 01 spielfrei ist. Anstelle von Wälzlagern kann eines der beiden Wälzlager (z. B. das äußere Lager zwischen erstem und drittem Ring) ggf. auch als Gleitlager mit Gleitflächen anstelle von Wälzkörpern 09; 10 ausgebildet sein. Als Abwälzbereich A; B bzw. verallgemeinert Abstützbereich A; B wird hier diejenige Länge oder derjenige Längsabschnitt des Wälzlagers verstanden, auf welcher bzw. auf welchem sich die beiden benachbarten Lagerringe 05; 07; 08 aufeinander (über Wälzkörper 9; 10 oder Gleitflächen) abstützen, d.h. die Länge in axialer Richtung zwischen dem Anfang des ersten Wälzkörpers 09; 10 bzw. der ersten Gleitfläche bis zum Ende des letzten Wälzkörpers 09; 10 bzw. der letzten Gleitfläche. Im Folgenden werden die Beispiele der Einfachheit halber für den Fall von Wälzlagern mit Wälzkörpern 9; 10 beschrieben, wobei jedoch die Lehre, insbesondere für das äußere Lager, auf die Ausführung als Gleitlager mit Gleitflächen im hierauf übertragenen Sinne anzuwenden ist (Fig. 1 bis 8).

Zumindest auf der Länge des Abwälzbereichs A der zwischen zweitem Lagerring 07 und drittem Lagerring 08 (d.h. zwischen innerstem und mittlerem Lagerring) angeordneten Wälzkörper 09 ist zwischen dem ersten (äußersten) Lagerring 05 und der im Seitengestell 04 angeordneten Bohrung 03 ein Spalt 11 vorgesehen, welcher eine Ausdehnung der Lagerringe 05; 07; 08 frei von einer Überschreitung einer maximal zulässigen Vorspannung der Lagerringe 05; 07; 08 in radialer Richtung untereinander erlaubt (Fig. 1 bis 5). Durch den sich in axialer Richtung über mindestens den Abwälzbereich A (Abstützbereich A) der zwischen zweitem Lagerring 07 und dritten Lagerring 08 angeordneten Wälzkörper 09 (Gleitflächen) erstreckenden Spalt 11 werden äußere und innere Lasten sowie Wärmeausdehnungen der Lagerung 01 kompensiert, ohne dass die Lagerung 01 zu irgendeinem Zeitpunkt Spiel aufweist. Die axiale Lage des Spaltes 11 in der Lagerung 01 ist vorzugsweise derart, dass in radialer Projektion der Abwälzbereich A innerhalb der Spaltlänge L zu liegen kommt. Der Spalt 11 erstreckt sich zumindest im Projektionsbereich des Abstützbereichs A um den vollen Umfang.

Grundsätzlich ist die besondere Anordnung des Spalts 11 im Bereich des Abwälzbereichs A der Wälzkörper 09; 10 auch bei Einringlagern anwendbar, wodurch diese ebenso frei von äußeren Lasten und Wärmeausdehnung immer spielfrei sind, ohne eine maximal zulässige Vorspannung zu überschreiten.

Im ersten Ausführungsbeispiel (Fig. 1) ist der erste, z. B. äußerste, Lagerring 05 einseitig des sich in axialer Richtung entlang des Abwälzbereichs A der Wälzkörper 09 erstreckenden Spalts 11, z. B. durch Einpressen, spielfrei gegenüber der Bohrung 03 bzw. deren Wand abgestützt.

Eine radiale Abmessung b des ersten Lagerrings 05 im Bereich des sich über den Abwälzbereich A erstreckenden Spalts 11 ist derart gewählt, dass eine vorgegebene Steifigkeit der Lagerung 01 erreicht wird. Die radiale Abmessung b des ersten Lagerrings 05 im Abwälzbereich A der Wälzkörper 09 zwischen zweitem Lagerring 07 und drittem Lagerring 08 beträgt zwischen 5 mm und 10 mm. Der Spalt 11 weist in radialer Richtung z. B. mindestens eine Weite a von 0,05 mm, vorteilhaft eine Weite von 0,05 mm bis 2,00 mm, insbesondere bis 1 mm auf. Diese Weite a kann in axialer und/oder Umfangsrichtung auch leicht variieren, solange sie nicht zu klein wird, d.h. z.B. über 0,02 mm bleibt.

Zwischen den Lagerringen 05; 07; 08 sind die Abwälzbereiche A; B frei von Verschmutzungen haltende Dichtringe 12; 13; 20 angeordnet. Zwischen zweitem Lagerring 07 und drittem Lagerring 08 kann zusätzlich zwischen dem Dichtring 13 und einem weiteren Dichtring 14 ein Fettraum 15 angeordnet sein, um Verschmutzungen aus der Lagerung 01 fern zu halten. Dies kann auch, wo nicht explizit ausgenommen, auf die übrigen Beispiele angewandt sein.

Der erste Lagerring 05 weist in axialer Richtung betrachtet außerhalb des Abwälzbereichs A der zwischen zweitem Lagerring 07 und drittem Lagerring 08 angeordneten Wälzkörper 09 einen Zentrierbund 16 auf seinem Außenumfang auf, der mit der Wandung der Bohrung 03 zur positionsrichtigen Anordnung des ersten Lagerrings 05 in der Bohrung 03 zusammen wirkt. Hierdurch wird Montage und Wartung vereinfacht. Durch das Ineinandergreifen von Zentrierbund 16 und Bohrung 03 erfolgt eine formschlüssige Verbindung gegen ein Bewegen in radialer Richtung. Der Zentrierbund 16 kann mit Spiel oder als Pressung ausgeführt sein.

Der erste Lagerring 05 kann darüber hinaus zur axialen Abbindung einen Kragen 17 aufweisen und ist mittels Befestigungsmittel 18, z. B. Schrauben 18 zur Sicherung gegenüber einer axialen Verschiebung am Seitengestell 04 angeordnet. Anstelle von Schrauben 18 können auch andere geeignete Befestigungsmittel 18 verwendet werden, etwa Nieten, Stifte oder Bolzen. Dies kann auch, wo nicht explizit ausgenommen, auf die übrigen Beispiele angewandt sein.

Zur Erleichterung einer Demontage des Zylinders 02 und/oder zur Vereinfachung einer Einstellung des Lagerspiels kann z. B. der erste Lagerring 05 und damit die in dem Seitengestell 04 angeordnete Bohrung 03 der Lagerung 01 einen größeren Außendurchmesser aufweisen, als ein Ballen 19 des Zylinders 02. Auch dies kann, wo nicht explizit ausgenommen, als vorteilhafte Variante auf die übrigen Beispiele angewandt sein.

Im Folgenden werden für die vergleichbaren und/oder gleichwirkenden Teile die selben Bezugszeichen beibehalten.

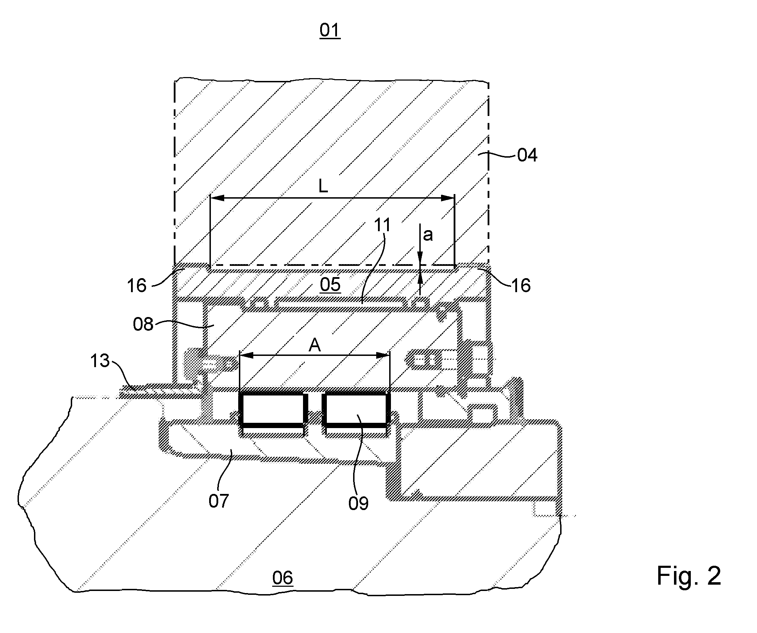

In der Ausgestaltung eines zweiten Ausführungsbeispiels (Fig. 2) ist im Gegensatz zum ersten Ausführungsbeispiel nun beidseits des Abwälzbereichs A der Wälzkörper 09 ein Zentrierbund 16 am Umfang des äußersten Lagerrings 05 vorgesehen. Die Dichtung 12 aus Fig. 1 kann hierbei entfallen. Die übrigen Ausgestaltungsmerkmale aus dem ersten Ausführungsbeispiel können einzeln oder in Kombination auf die Ausführung des zweiten Ausführungsbeispiels angewandt werden und umgekehrt. So weist der Spalt 11 in radialer Richtung z. B. auch hier mindestens eine Weite a von 0,05 mm, vorteilhaft eine Weite a von 0,05 mm bis 2,00 mm, insbesondere bis 1 mm auf. Diese Weite a kann in axialer und/oder Umfangsrichtung auch leicht variieren, solange sie nicht zu klein wird, d.h. z.B. über 0,02 mm bleibt.

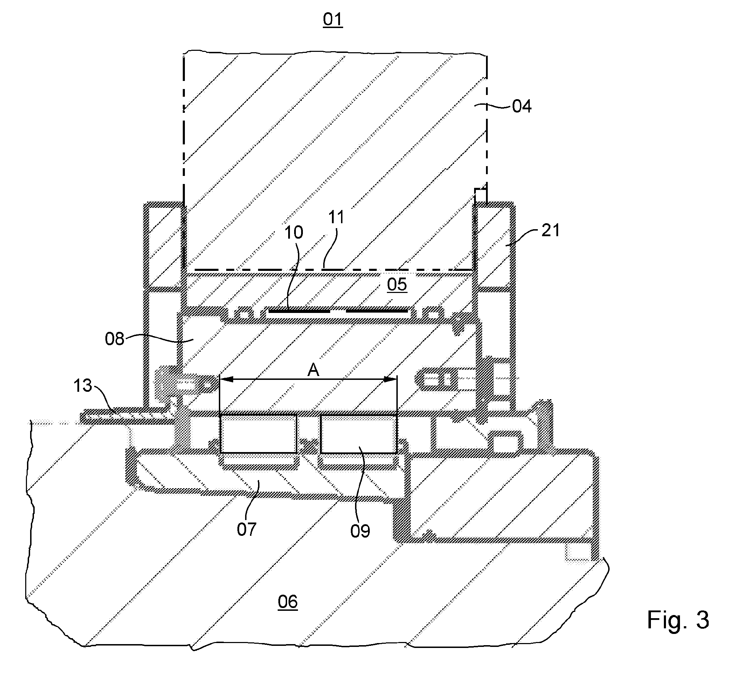

In der Ausgestaltung eines dritten Ausführungsbeispiels (Fig. 3) ist im Gegensatz zu den ersten beiden Ausführungsbeispielen nun ein über die gesamte Länge zwischen Bohrung 03 und dem Außenumfang des äußersten Lagerrings 05 durchgehender Spalt 11 vorgesehen, d. h. am Umfang des äußersten Lagerrings 05 ist kein Zentrierbund 16 vorgesehen. Um nun ein gewisses Maß an Stabilität zu gewährleisten und/oder eine Zentrierung der Lagerung 01 in der Bohrung 03 vornehmen und aufrechterhalten zu können, ist hier eine Klemmeinrichtung 21, z. B. beidseitig des Seitengestells 04 ein den äußeren Lagerring 05 stirnseitig überlappender Klemmring 21, vorgesehen. Durch ein gegenüber dem Seitengestell 04 im Bereich der Klemmstelle geringfügiges Übermaß und durch Verschrauben am Seitengestell 04 erfolgt eine kraftschlüssige Verbindung gegen ein Bewegen in radialer Richtung. Auch hier kann die Dichtung 12 aus Fig. 1 entfallen. Die übrigen Ausgestaltungsmerkmale mit Ausnahme des Zentrierbundes 16 aus den ersten Ausführungsbeispielen sind einzeln oder in Kombination auf die Ausführung des dritten Ausführungsbeispiels anwendbar und umgekehrt. Der Spalt 11 weist in radialer Richtung hier z. B. mindestens eine Weite a von 0,01 mm, vorteilhaft eine Weite a von 0,01 mm bis 0,20 mm, insbesondere bis 0,10 mm auf. Diese Weite a kann in axialer und/oder Umfangsrichtung auch leicht variieren, solange sie nicht zu klein wird, d.h. z.B. hier über 0,01 mm bleibt.

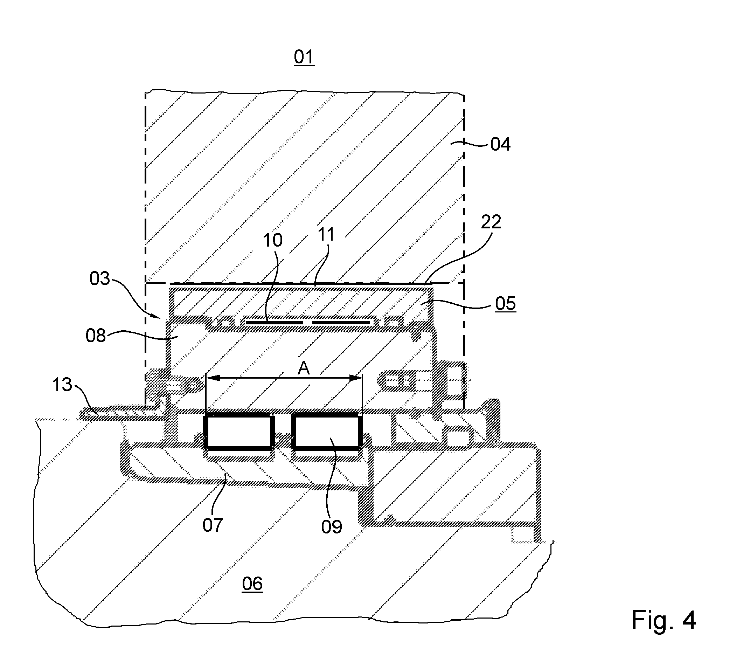

In der Ausgestaltung eines vierten Ausführungsbeispiels (Fig. 4) ist wie in Fig. 3 ein durchgehender Spalt 11 zwischen der z. B. metallenen Außenseite des äußeren Lagerrings 05 und der z. B. metallenen Innenseite der Bohrung 03 vorgesehen, jedoch ist in diesem Spalt 11 zwischen diesen im wesentlichen inkompressiblen Materialien eine ein kompressibles Material enthaltende Schicht 22, insbesondere eine reversibel kompressible Schicht 22, angeordnet. In vorteilhafter Ausbildung wird der Spalt 11 in mindestens drei Winkelbereichen des Umfangs, vorzugsweise jedoch vollumfänglich, durch die kompressible Schicht 22 in radialer Richtung vollständig ausgefüllt. Eine Weite a des Spaltes 11 beträgt hier vorzugsweise z. B. mindestens 0,05 mm, vorteilhaft eine Weite a von 0,05 mm bis 2,00 mm, insbesondere bis 1 mm auf. Diese Weite a kann in axialer und/oder Umfangsrichtung auch leicht variieren, solange sie nicht zu klein wird, d.h. z.B. über 0,02 mm bleibt. Vorteilhafter Weise wird die Schicht 22 vor Einbringung der restlichen Lagerung 01 in die Bohrung 03 verbracht. Vorzugsweise weist der Außendurchmesser der Schicht 22 vor Montage ein Übermaß zur lichten Weite der Bohrung 03 auf, sodass die Schicht 22 nach Einsatz einer Vorspannung unterworfen ist. Wie im Beispiel der Fig. 3 ist auch hier am Umfang des äußersten Lagerrings 05 kein Zentrierbund 16 vorgesehen. Um ein gewisses Maß an Stabilität in axialer Richtung zu erreichen und eine Fixierung in axialer Richtung zu gewährleisten kann ein nicht dargestellter Anschlag in einer zur o.g. Klemmeinrichtung 21 (jedoch ohne Übermaß) ähnlichen Ausbildung, z. B. beidseitig des Seitengestells 04 ein den äußeren Lagerring 05 stirnseitig überlappender Ring, vorgesehen sein. Auch hier kann die Dichtung 12 aus Fig. 1 entfallen. Die übrigen Ausgestaltungsmerkmale der vorgenannten Ausführungen mit Ausnahme des Zentrierbundes 16 aus den ersten Ausführungsbeispielen und dem kraftschlüssigen Klemmen sind einzeln oder in Kombination auf die Ausführung des dritten Ausführungsbeispiels anwendbar und umgekehrt.

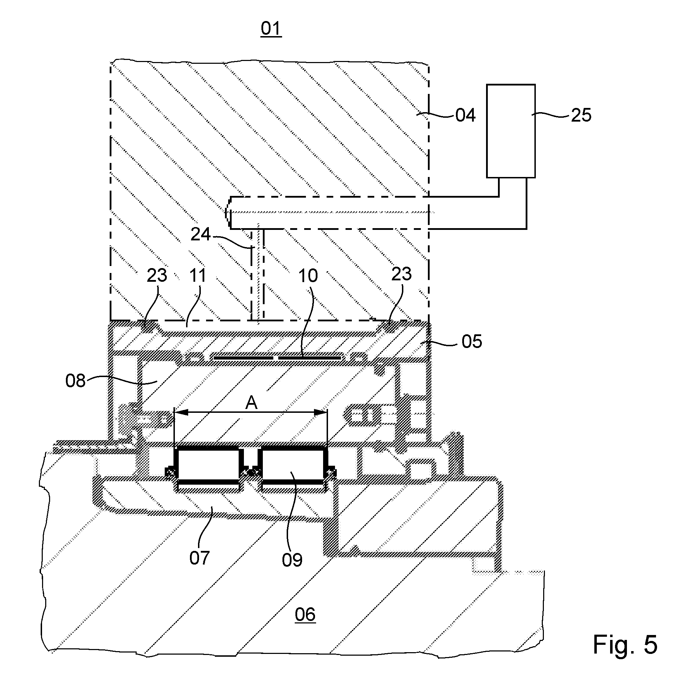

Eine erste Ausgestaltung des fünften Ausführungsbeispiels (Fig. 5) kann derjenigen des zweiten Beispiels (Fig. 2) entsprechen, wobei jedoch im beidseitig durch Zentrierbunde 16 begrenzen Spalt 11 ein Fluid, insbesondere Öl, angeordnet ist. Dabei kann beidseitig wie in Fig. 5 dargestellt zusätzlich eine Fluidsperre z. B. in Form einer Dichtung 23, z.B. O-Ring, vorgesehen sein. Der das Öl aufweisende Spalt 11 steht über einen z.B. im Seitengestell 04 verlaufenden Kanal 24 mit einem Reservoir 25, z.B. einer Druckdose 25, in Verbindung. Vorzugsweise ist der Öldruck über die Druckdose 25 oder einen anderen Mechanismus in seiner Höhe einstellbar. Der Spalt 11 weist hier in radialer Richtung z. B. wieder mindestens eine Weite a von 0,05 mm, vorteilhaft eine Weite a von 0,05 mm bis 2,00 mm, insbesondere bis 1 mm auf. Diese Weite a kann in axialer und/oder Umfangsrichtung auch leicht variieren, solange sie nicht zu klein wird, d.h. z.B. über 0,02 mm bleibt.

In einer zweiten Ausgestaltung des fünften Ausführungsbeispiels kann anstelle der beiden Zentrierbunde 16 im Bereich der beiden stirnseitigen Enden des äußeren Lagerrings 05 anstelle der Zentrierbunde 16 lediglich eine Verjüngung des Spaltes 11 - z. B. auf lediglich 0,01 - 0,05 mm Spaltbreite - vorgesehen sein, wobei z.B. im Bereich dieser Verjüngung wieder jeweils eine Dichtung 23, z. B. ein O-Ring, vorgesehen ist. Im mittleren, zwischen den endnahen Verjüngungen liegenden Bereich liegt z.B. eine Weite a von mindestens 0,05 mm, vorteilhaft eine Weite a von 0,05 mm bis 2,00 mm, insbesondere bis 1 mm vor. Auch hier kann diese Weite a in axialer und/oder Umfangsrichtung leicht variieren, solange sie nicht zu klein wird, d.h. z.B. über 0,02 mm bleibt.

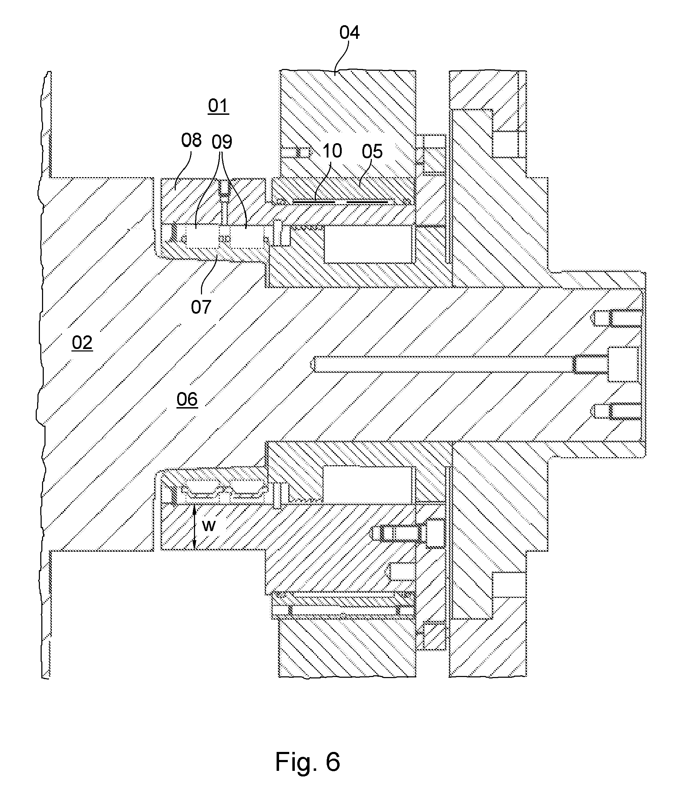

Fig. 6 zeigt eine Ausführung der Lagerung 01, wobei der Abwälzbereich A der Wälzkörper 09 des die Rotation des Zylinders 02 ermöglichenden Radiallagers 07, 08, 09 und der Abwälz- bzw. Abstützbereich B des die An-/Abstellbewegung ermöglichenden Radiallagers 05, 08, 10 der selben Lagerung 01 sich in axialer Richtung nicht überschneiden bzw. in axialer Richtung betrachtet zueinander versetzt angeordnet sind. Dies wird beispielsweise in Fig. 6 dadurch erzielt, dass der mittlere Lagerring 08 eine Länge aufweist, welche mindestens der Summe aus der Länge des Abwälzbereichs A des inneren Radiallagers und des Abwälz- bzw. Abstützbereichs B des äußeren Radiallagers entspricht. Vorzugsweise liegt der Teil bzw. Längsabschnitt, welcher das die Rotation ermöglichende innere Radiallager 07, 08, 09 trägt, außerhalb der Flucht des Seitengestells 04, insbesondere auf der dem Zylinder 02 zugewandten Seite des Seitengestells 04. Der mittlere Lagerring 08 wirkt dann auf einem zylindernahen Längsabschnitt auf seiner Innenseite mit Wälzkörpern 09 eines die Rotation des Zapfens 06 ermöglichenden Radiallagers 07, 08, 09, und auf einem zylinderfernen, und vom erstgenannten Längsabschnitt verschiednen Längsabschnitt auf seiner Außenseite über Wälzkörper 10 oder Gleitflächen mit dem äußeren Lagerring 05 eines die Druck-An-/Ab-Stellung ermöglichenden Radiallagers 05, 08, 10 zusammen. Vorzugsweise ist das die Druck-An-/Ab-Stellung ermöglichende Radiallager als Nadellager und die Wälzkörper 10 als nadelartige Wälzelemente ausgebildet. Wenn ggf. durch die Rotation Wärme entsteht und sich infolge dessen der benachbarte Bereich des mittleren Lagerringes 08 erwärmt, kann sich das zylindernahe Ende des mittleren Lagerringes 08 ungehindert ausdehnen, ohne durch den äußeren Lagerring 05 und das Seitengestell 04 eingespannt und damit beschränkt zu sein.

In vorteilhafter Ausbildung ist der Lagerring 08 zumindest im Abwälzbereich A des die Rotation des Zapfens 06 ermöglichenden Radiallagers 07, 08, 09 mit einer im wesentlichen in Umfangsrichtung konstanten Wandstärke w (Abweichung von einer kleinsten Wandstärke w höchstens 10 %) ausgebildet. Hierdurch werden symmetrische Bedingungen für thermische Effekte geschaffen. Die Wandstärke w liegt hier vorzugsweise zwischen 5 mm und 50 mm, insbesondere zwischen 10 mm und 30 mm.

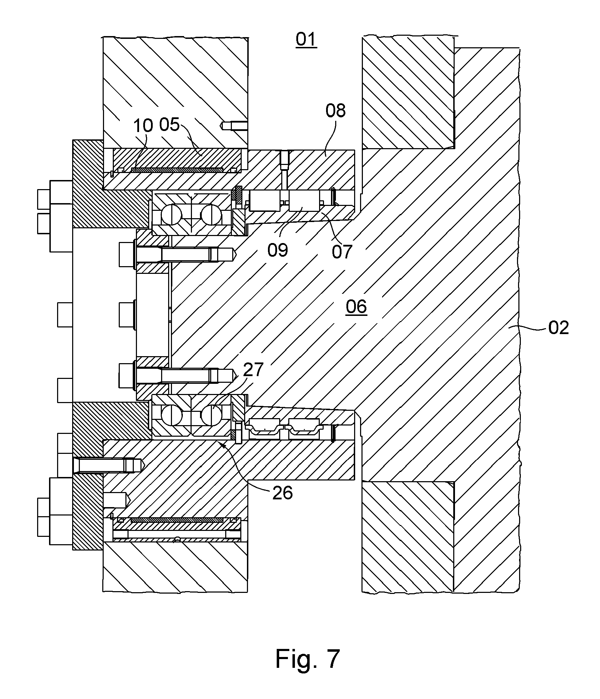

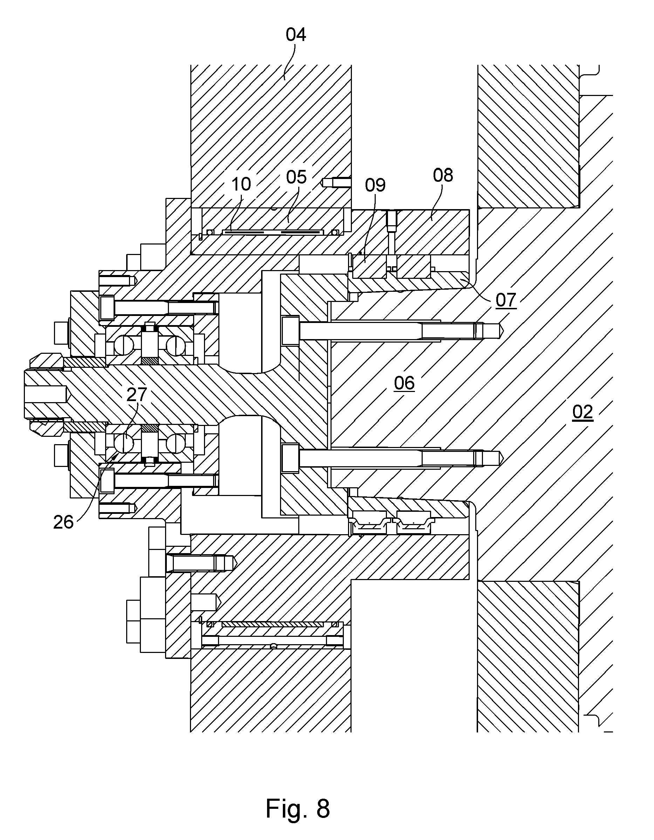

Die in Fig. 7 und 8 dargestellte Lagerung 01 ist exemplarisch für die zu den vorhergehenden Darstellungen gegenüberliegende Gestellseite, z. B. die Bedienseite, dargestellt. Diese Lagerung 01 weist zwischen dem inneren Lagerring 07 und dem mittleren Lagerring 08 neben einem ersten Lagerabschnitt mit den Wälzkörpern 09 axial beabstandet einen zweiten Lagerabschnitt mit einem axial abbindenden Lager 26, z. B. einem sog. Axiallager 26, auf. Hierbei wirkt eine bezüglich des inneren Lagerrings 07 ortsfeste Lauffläche mit einem Wälzkörper 27, und dieser mit einer bezüglich des mittleren Lagerrings 08 ortsfesten Lauffläche formschlüssig entgegen einer Relativbewegung in axialer Richtung zusammen. Das Axiallager 26 kann entweder wie im Zusammenhang mit Fig. 6 und 7 auf der zur Antriebsseite (z. B. Fig. 6) gegenüberliegenden Seite (Bedienseite, z. B. Fig. 7), oder aber gemeinsam mit einem den Zylinder 02 antreibenden Antrieb, z. B. Antriebsrad oder direkt angekoppelter Antriebsmotor (nicht dargestellt) aus der selben Seite, z. B. Antriebsseite, angeordnet sein. Das Axiallager 26 kann vorteilhaft auch auf der Bedienseite oder der Antriebsseite (dargestellt) der in Fig. 1 bis 5 dargelegten Lagerungen 01 vorgesehen sein.

In Fig. 8 ist eine Variante der Ausführung nach Fig. 7 für die axiale Abbindung des Zylinders 02 dargestellt. Hierbei ist das Axiallager 26 weiter nach außen gezogen als in Fig. 7.

Für die Ausführung nach Fig. 6 bzw. 7 oder 8 kann in Weiterbildung zusätzlich zu den axial versetzten Abstützbereichen A; B ein Spalt 11 nach einem der Ausführungen gemäß Fig. 1 bis 5 zwischen dem äußeren Lagerring 05 und der Wandung der Bohrung 03 vorgesehen sein.

In einer besonderen Ausbildung des Zylinders 02 der vorausgehenden Ausführungsbeispiele, z. B. als Formzylinder 02, ist der Zylinder 02 in axialer Richtung um einen Betrag Δ, z.B. um mindestens Δ ≥ ± 0,5 mm, insbesondere ≥ ± 1,0 mm, bewegbar ausgebildet. Diese Bewegung wird vorzugsweise im inneren, die Rotation ermöglichenden Radiallager 07, 08, 09 aufgenommen, indem der Abwälzbereich A für die Wälzkörper 09 auf der Innenseite des mittleren Lagerrings 08 oder der Außenseite des inneren Lagerrings 07 um mindestens den Betrag Δ breiter ausgebildet ist als die Länge zwischen den äußeren Enden der beiden äußeren Wälzkörper 09 des Lagers. In diesem Fall verläuft der o.g. Spalt 11 z. B. über eine Länge von mindesten dem Abstand zwischen den genannten Wälzkörperaußenkanten zuzüglich dem Betrag Δ.

In Weiterbildung können anstelle des einen exzentrischen Lagerringes 08 (Zwischenring) zwei exzentrisch drehbar über Wälzkörper ineinander gelagerte Zwischenringe vorgesehen sein.

### Bezugszeichenliste

- 01: Lagerung
- 02: Zylinder, Formzylinder
- 03: Bohrung
- 04: Seitengestell
- 05: Lagerring, erster
- 06: Zapfen
- 07: Lagerring, zweiter
- 08: Lagerring, dritter
- 09: Wälzkörper
- 10: Wälzkörper
- 11: Spalt
- 12: Dichtring
- 13: Dichtring
- 14: Dichtring
- 15: Fettraum
- 16: Zentrierbund
- 17: Kragen
- 18: Befestigungsmittel, Schraube
- 19: Ballen
- 20: Dichtring
- 21: Klemmeinrichtung, Klemmring
- 22: Schicht
- 23: Dichtung
- 24: Kanal
- 25: Reservoir, Druckdose
- 26: Lager, Axiallager
- 27: Wälzkörper

- A: Abstützbereich, Abwälzbereich
- B: Abstützbereich, Abwälzbereich
- L: Spalt, Länge

- a: Weite
- b: Abmessung, radiale
- w: Wandstärke

## Patentansprüche

1. Lagerung (01) eines Zylinders (02) einer Rotationsdruckmaschine, mit mindestens einem ersten in einer Bohrung (03) eines Seitengestells (04) angeordneten Lagerring (05), sowie mindestens einem gegenüber dem ersten Lagerring (05) drehbar gelagerten zweiten Lagerring (07), wobei zwischen dem ersten Lagerring (05) und dem zweiten Lagerring (07) mindestens ein dritter Lagerring (08) gegenüber dem ersten Lagerring (05) und dem zweiten Lagerring (07) drehbar angeordnet ist, wobei der dritte Lagerring (08) zur Ermöglichung einer Druck-An-/Ab-Stellung an einen benachbarten Zylinder exzenterförmig ausgebildet ist, und wobei zwischen dem zweiten Lagerring (07) und dem dritten Lagerring (08) innerhalb mindestens eines sich in axialer Richtung erstreckenden Abwälzbereichs (A) erste Wälzkörper (09) und zwischen dem ersten Lagerring (05) und dem dritten Lagerring (08) innerhalb mindestens eines sich in axialer Richtung erstreckenden Abstützbereichs (B) zweite Wälzkörper (10) oder Gleitflächen angeordnet sind, **dadurch gekennzeichnet, dass** zwischen dem ersten Lagerring (05) und der Bohrung (03) ein sich in axialer Richtung über mindestens den zwischen zweitem und dritten Lagerring angeordneten Abwälzbereich (A) erstreckender Spalt (11) vorgesehen ist, welcher ein elastisches Aufweiten des ersten Lagerrings (05) radial von innen nach außen erlaubt, um im Abwälzbereich (A) eine Ausdehnung der Lagerringe (05; 07) in radialer Richtung frei vor Überschreitung einer maximal zulässigen Vorspannung zu ermöglichen.

2. Lagerung (01) eines Zylinders (02) einer Rotationsdruckmaschine, mit mindestens einem ersten in einer Bohrung (03) eines Seitengestells (04) angeordneten Lagerring (05), sowie mindestens einem gegenüber dem ersten Lagerring (05) drehbar gelagerten zweiten Lagerring (07), wobei zwischen dem ersten Lagerring (05) und dem zweiten Lagerring (07) mindestens ein dritter Lagerring (08) gegenüber dem ersten Lagerring (05) und dem zweiten Lagerring (07) drehbar angeordnet ist, wobei der dritte Lagerring (08) zur Ermöglichung einer Druck-An-/Ab-Stellung an einen benachbarten Zylinder exzenterförmig ausgebildet ist, und wobei zwischen dem zweiten Lagerring (07) und dem dritten Lagerring (08) innerhalb mindestens eines sich in axialer Richtung erstreckenden Abwälzbereichs (A) erste Wälzkörper (09) und zwischen dem ersten Lagerring (05) und dem dritten Lagerring (08) innerhalb mindestens eines sich in axialer Richtung erstreckenden Abstützbereichs (B) zweite Wälzkörper (10) oder Gleitflächen angeordnet sind, **dadurch gekennzeichnet, dass** der Abwälzbereich (A) und der Abstützbereich (B) in axialer Richtung betrachtet ohne Überschneidung in der Lagerung (01) angeordnet sind.

3. Lagerung nach Anspruch 2, **dadurch gekennzeichnet, dass** zwischen dem ersten Lagerring (05) und der Bohrung (03) ein sich in axialer Richtung über den Abstützbereich (B) erstreckender Spalt (11) vorgesehen ist, welcher ein elastisches Aufweiten des ersten Lagerrings (05) radial von innen nach außen erlaubt, um im Abstützbereich (B) eine Ausdehnung der Lagerringe (05; 07) in radialer Richtung frei vor Überschreitung einer maximal zulässigen Vorspannung zu ermöglichen.

4. Lagerung nach Anspruch 1 oder 3, **dadurch gekennzeichnet, dass** der erste Lagerring (05) lediglich einseitig des sich in axialer Richtung entlang des Abwälzbereichs (A) der Wälzkörper (09) erstreckenden Spalts (11) gegenüber der Bohrung (03) abgestützt, und auf der anderen Seite lediglich abgedichtet ist.

5. Lagerung nach Anspruch 1 oder 3, **dadurch gekennzeichnet, dass** der erste Lagerring (05) beidseits des sich in axialer Richtung entlang des Abwälzbereichs (A) der Wälzkörper (09) erstreckenden Spalts (11) gegenüber der Bohrung (03) abgestützt ist.

6. Lagerung nach Anspruch 1 oder 3, **dadurch gekennzeichnet, dass** der Spalt (11) zwischen erstem Lagerring (05) und Bohrung (03) durchgehend über die Länge des ersten Lagerrings (05) verläuft.

7. Lagerung nach Anspruch 6, **dadurch gekennzeichnet, dass** im Spalt (11) eine kompressibles Material enthaltende Schicht (22) angeordnet ist.

8. Lagerung nach Anspruch 6, **dadurch gekennzeichnet, dass** eine Klemmeinrichtung (21) vorgesehen ist, mittels welcher der erste Lagerring (05) relativ zum Seitengestell (04) fixierbar ist.

9. Lagerung nach Anspruch 5 oder 6, **dadurch gekennzeichnet, dass** im Spalt (11) ein Fluid, insbesondere Öl, angeordnet ist.

10. Lagerung nach einem der vorhergehenden Ansprüche, **dadurch gekennzeichnet, dass** eine radiale Abmessung (b) des ersten Lagerrings (05) im Bereich des sich über den Abwälzbereich (A) erstreckenden Spalts (11) derart gewählt ist, dass eine vorgegebene Steifigkeit der Lagerung (01) erreicht wird.

11. Lagerung nach Anspruch 10, **dadurch gekennzeichnet, dass** die radiale Abmessung (b) des ersten Lagerrings (05) im Bereich des sich über den Abwälzbereich (A) erstreckenden Spalts (11) 5 mm bis 10 mm beträgt.

12. Lagerung nach einem der vorhergehenden Ansprüche, **dadurch gekennzeichnet, dass** der Spalt (11) eine Weite (a) von mindestens 0,05 mm in radialer Richtung aufweist.

13. Lagerung nach einem der vorhergehenden Ansprüche, **dadurch gekennzeichnet, dass** zwischen den Lagerringen (05; 07; 08) wenigstens ein mindestens einen Abwälzbereich (A; B) frei von Verschmutzungen haltender Dichtring (12; 13; 14; 20) angeordnet ist.

14. Lagerung nach einem der vorhergehenden Ansprüche, **dadurch gekennzeichnet, dass** zwischen den Lagerringen (05; 07; 08) mindestens ein mindestens einen Abwälzbereich (A; B) frei von Verschmutzungen haltender Fettraum (15) angeordnet ist.

15. Lagerung nach einem der vorhergehenden Ansprüche, **dadurch gekennzeichnet, dass** der erste Lagerring (05) außerhalb des Abwälzbereichs (A) einen Zentrierbund (16) aufweist, zur positionsrichtigen Anordnung des ersten Lagerrings (05) in der Bohrung (03).

16. Lagerung nach einem der vorhergehenden Ansprüche, **dadurch gekennzeichnet, dass** der erste Lagerring (05) zur axialen Abbindung einen Kragen (17) aufweist und mittels Befestigungsmittel (18) zur Sicherung gegenüber einer axialen Verschiebung am Seitengestell (04) angeordnet ist.

17. Lagerung nach Anspruch 2, **dadurch gekennzeichnet, dass** der dritte Lagerring (08) zumindest im Abwälzbereich (A) mit einer im wesentlichen in Umfangsrichtung konstanten Wandstärke (w) ausgebildet ist.

18. Lagerung nach einem der vorhergehenden Ansprüche, **dadurch gekennzeichnet, dass** der Zylinder (02) in axialer Richtung um einen Betrag Δ von mindestens Δ ≥ ± 0,5 mm bewegbar ausgebildet ist.

19. Lagerung nach Anspruch 18, **dadurch gekennzeichnet, dass** der Abwälzbereich (A) für die Wälzkörper (09) auf der Innenseite des dritten Lagerrings (08) oder der Außenseite des zweiten Lagerrings (07) um mindestens den Betrag Δ breiter ausgebildet ist, als der Abstand zwischen den stirnseitennahen Enden der beiden jeweils der Stirnseite am nächsten liegenden Wälzkörper (09).

20. Lagerung nach einem oder mehreren der vorhergehenden Ansprüche, **dadurch gekennzeichnet, dass** der Spalt (11) wenigstens auf der Länge des Abwälzbereichs (A) zumindest über einen Winkelbereich von 240°, insbesondere300°, in Umfangsrichtung durchgehend ausgebildet ist.

21. Lagerung nach einem oder mehreren der vorhergehenden Ansprüche, **dadurch gekennzeichnet, dass** der Spalt (11) wenigstens auf der Länge des Abwälzbereichs (A) in Umfangsrichtung über den vollen Umfang durchgehend ausgebildet ist.

22. Lagerung nach Anspruch 1 oder 3, **dadurch gekennzeichnet, dass** der erste Lagerring (05) lediglich einseitig des sich in axialer Richtung entlang des Abwälzbereichs (A) der Wälzkörper (09) erstreckenden Spalts (11) gegenüber der Bohrung (03) abgestützt ist.
